# EUROPEAN PATENT APPLICATION

(11) **EP 4 234 340 A1**
(43) Date of publication of application: **30.08.2023**
(21) Application number: 21882497.7
(22) Date of filing: 22.09.2021
(51) Int. Cl.: B60R 16/03, H02J 7/00, H02J 7/14, H02J 7/34

(54) **POWER SUPPLY SYSTEM FOR VEHICLE**

(30) Priority: 22.10.2020 JP 2020177229
(71) Applicant: Imasen Electric Industrial Co., Ltd., Inuyama-shi, Aichi 484-8507 (JP)
(72) Inventor: HATTORI, Makoto, Inuyama-shi, Aichi 484-8507 (JP); YASUNAGA, Daisuke, Inuyama-shi, Aichi 484-8507 (JP); MAKIO, Daisuke, Inuyama-shi, Aichi 484-8507 (JP)
(74) Representative: Office Freylinger
(86) International application number: PCT/JP2021/034752
(87) International publication number: WO 2022/085356

(57) **Abstract**

Provided is a power supply system for a vehicle, the power supply system supporting a start-stop function and having a function as a backup power supply. A power supply system 1 for a vehicle according to this invention comprises: a DC power supply 2 mounted to a vehicle for supplying power to one or a plurality of loads 21; a first switching element Q1 which is serially connected between the DC power supply 2 and the loads 21; an electric power storage unit 3 which is electrically connected to the DC power supply 2; and a DC-DC converter 4 which is connected between the electric power storage unit 3 and the first switching element Q1. The DC-DC converter includes a second switching element Q2, a third switching element Q3, a fourth switching element Q4, a fifth switching element Q5, and a coil 6.

## Description

### TECHNICAL FIELD

The present invention relates to a power supply system installed in a vehicle. In particular, the present invention relates to a power supply system to be installed in a vehicle having a start-stop function, the power supply system being able to handle a reduction in voltage of the vehicle battery when restarting the engine, while at the same time being able to work as a backup power supply when the power supply is lost.

### BACKGROUND ART

In recent years, vehicles equipped with start-stop systems, for the purpose of reducing fuel consumption, are becoming widespread. Start-stop systems turn off the engine when the vehicle stops to conserve fuel. However, when resuming travel, a large current is consumed in order to activate the starter, which causes an instant reduction in battery voltage, and there is a possibility that a load connected to the battery may cease operation temporarily. There is thus a need for a circuit configuration that compensates for the voltage reduction at the time of restarting the engine and guarantees a power supply for the load.

Patent Document 1 discloses an example of a power supply system for a vehicle equipped with a start-stop system. The power supply system for a start-stop vehicle described in Patent Document 1 is provided with a battery that is charged by an alternator of the vehicle, and various electric loads that are supplied with power by the battery. Interposed between the battery and the electric loads is a voltage compensation means. The starter of the vehicle is also connected to the battery, and the battery supplies power to the starter when the vehicle is started. In Patent Document 1, a capacitor or a DC-DC converter are applied as the voltage compensation means. When the vehicle restarts after being stopped, the voltage compensation means boosts the input voltage and supplies the voltage to the electric loads.

Vehicles provided with backup power supplies for when the power supply is lost are becoming widespread. A backup power supply is a power supply that supplies power to a specific load when the main power supply installed in the vehicle has become unable to supply power due to an accident or the like. Patent Document 2 discloses a backup power supply device having a capacitor, a charging circuit provided in a charging path of the capacitor for stepping down a voltage, a boost circuit provided in an output path of the capacitor, and a door-lock releasing output terminal connected to the boost circuit.

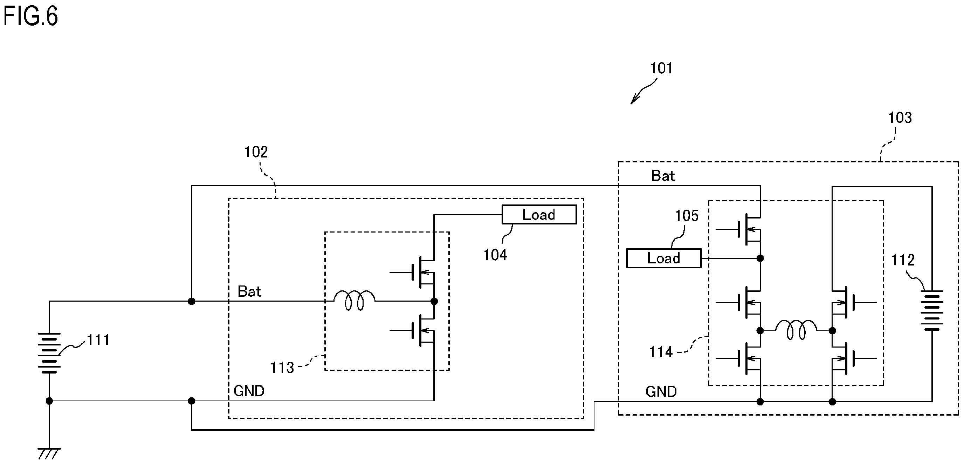

A power supply system for a vehicle supporting the start-stop function and having a function as a backup power supply has been considered in the conventional art. Fig. 6 illustrates a power supply system 101 that is an example of a conventional power supply system. The power supply system 101 is separately provided with a power supply subsystem 102 for stable supplying of power to a load when restarting the engine from a stopped state, and a backup power supply subsystem 103.

The conventional power supply system 101 is provided with an electric power storage device 111 for supplying power at a predetermined voltage to a load 104. The electric power storage device 111 is connected to the alternator of the vehicle, and is charged while the vehicle travels. In addition, the power supply subsystem 102 is provided with a DC-DC converter 113 composed of a switching element and a coil between the electric power storage device 111 and the load 104. When the engine is restarted after a stopped state, the DC-DC converter 113 serves as a boost circuit, compensating for the temporary voltage reduction of the electric power storage device 111, and supplying power at a prescribed voltage to the load 104.

The backup power supply subsystem 103 is provided with an electric power storage device 112 separate from the electric power storage device 111, and a DC-DC converter 114 separate from the DC-DC converter 113. The electric power storage device 112 is charged by the alternator while the vehicle is traveling. When the supply of power from the electric power storage device 111 stops, the backup power supply subsystem 103 boosts the power from the electric power storage device 112 using the DC-DC converter 114, and supplies the power to a specific load 105.

### RELATED ART DOCUMENTS

### PATENT DOCUMENTS

[Patent Document 1] Japanese Unexamined Patent Application Publication No. 2002-38984
[Patent Document 2] WO 2013/125170

### DISCLOSURE OF THE INVENTION

### PROBLEMS TO BE SOLVED BY THE INVENTION

In conventional power supply systems for vehicles, providing a configuration that supports the start-stop function and works as a backup power supply required two storage batteries and two DC-DC converters to be incorporated into separate subsystems. Therefore, the system became complicated, and it was difficult to miniaturize the circuit as a whole.

The present invention was made in view of these current circumstances, in order to address the problem of providing a power supply system for a vehicle, the power supply system supporting a start-stop function and having a function as a backup power supply, despite having a reduced number of elements used in the boost and step-down circuit compared to the conventional art.

### MEANS FOR SOLVING THE PROBLEMS

The invention according to claim 1 relates to a power supply system for a vehicle. The power supply system for a vehicle according to claim 1 includes a DC power supply mounted to a vehicle for supplying power to one or a plurality of loads, a first switching element that is serially connected between the DC power supply and the loads, an electric power storage unit that is electrically connected to the DC power supply, and a DC-DC converter that is connected between the electric power storage unit and the first switching element. The power supply system for a vehicle according to the present invention is characterized in that the DC-DC converter includes a second switching element, a third switching element, a fourth switching element, a fifth switching element, and a coil.

In the DC-DC converter of the power supply system for a vehicle according to the present invention, it is preferable that the second switching element and the third switching element be serially connected so as to constitute a first leg, the fourth switching element and the fifth switching element be serially connected so as to constitute a second leg, an end part of the coil be connected between the second switching element and the third switching element, and another end part of the coil be connected between the fourth switching element and the fifth switching element.

The DC-DC converter of the power supply system for a vehicle according to claim the present invention serves as a boost converter for boosting an electric current from the DC power supply when the first switching element is in an off state, by setting the second switching element to an on state, setting the third switching element to an off state, and switching the fourth switching element and the fifth switching element. In addition, the DC-DC converter serves as a step-down converter for stepping down the electric current from the DC power supply when the first switching element is in an on state, by setting the second switching element to an off state, setting the third switching element to an on state, and switching the fourth switching element and the fifth switching element. Further, the DC-DC converter serves as a boost converter for boosting an electric current from the electric power storage unit when the first switching element is in an off state, by setting the second switching element to an off state, setting the third switching element to an on state, and switching the fourth switching element and the fifth switching element. In other words, the DC-DC converter according to the present invention functions as a boost/step-down converter.

The electric power storage unit of the power supply system for a vehicle according to the present invention is a secondary battery or an electric double layer capacitor having a lower rated voltage than a supply voltage of the DC power supply.

In the power supply system for a vehicle according to the present invention, it is preferable that one or a plurality of switching elements selected from the group consisting of the first switching element, the second switching element, the third switching element, the fourth switching element, and the fifth switching element be MOSFETs.

### EFFECTS OF THE INVENTION

In the power supply system for a vehicle according to the present invention, a first switching element is serially connected between a DC power supply and a load, a first DC power supply and an electric storage unit are electrically connected with a DC-DC converter interposed therebetween, and the DC-DC converter serves as a boost/step-down converter. Therefore, there is no need to install a DC-DC converter in each of the subsystems for the start-stop function and the backup power supply function. This makes it possible to provide a power supply system for a vehicle that has a large capacity at a low cost.

### BRIEF DESCRIPTION OF THE DRAWINGS

Fig. 1 schematically illustrates a configuration of a power supply system for a vehicle according to a preferred embodiment of the present invention;
Fig. 2 illustrates a state wherein the power supply system for a vehicle of the present invention supplies power from a DC power supply to a load;
Fig. 3 illustrates a state wherein the power supply system for a vehicle of the present invention supplies power from the DC power supply to the load when restarting the engine after idling;
Fig. 4 illustrates a state wherein the power supply system for a vehicle of the present invention supplies power from the DC power supply to an electric storage unit;
Fig. 5 illustrates a state wherein the power supply system for a vehicle of the present invention supplies power from the electric power storage unit to the load; and
Fig. 6 schematically illustrates a configuration of a conventional power supply system for a vehicle.

### MODE FOR CARRYING OUT THE INVENTION

A most preferred embodiment of the power supply system for a vehicle of the present invention is described below with reference to the drawings.

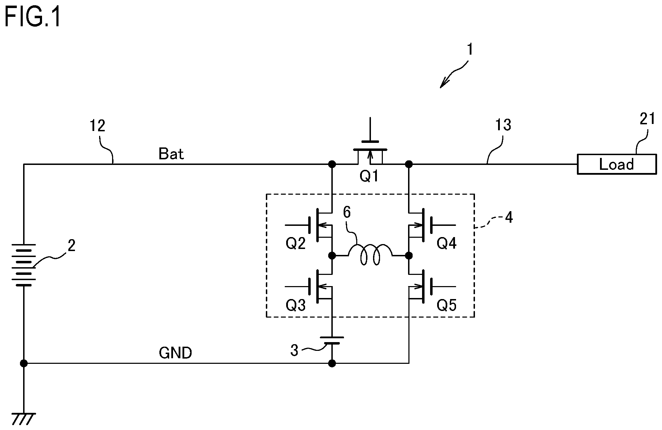

Fig. 1 illustrates an embodiment of the power supply system 1 for a vehicle of the present embodiment. The power supply system 1 for a vehicle according to the present embodiment is provided with a DC power supply 2, an electric power storage unit 3, a DC-DC converter 4, and a first switching element Q1.

The DC power supply 2 supplies power to one or more loads 21. Preferably, the DC power supply 2 is composed of an electric power storage device that is charged by a power generator of the vehicle. As a preferred example, a lead battery that is most commonly used as a vehicle battery may be used as the DC power supply 2. In addition, a battery wherein a plurality of electric cells such as lithium-ion cells or nickel-hydrogen cells are serially connected may be used as the DC power supply 2. As an alternative configuration, the alternator and a rectifier circuit may be applied as the DC power supply 2.

The DC power supply 2 supplies power to one or more loads 21 installed in the vehicle, such as audio equipment, an air conditioner, an engine control ECU, and the like. The rated voltage and the electric storage capacity of the DC power supply 2 may be changed as appropriate according to the standard of the voltage and the electric current to be supplied to the connected loads 21.

A first switching element Q1 is serially connected between the positive electrode side of the DC power supply 2 and the load 21. In a preferred embodiment, the positive electrode of the DC power supply 2 and the drain side of the first switching element Q1 are connected by a wire 12, and the load 21 and the source side of the first switching element Q1 are connected by a wire 13.

A semiconductor switching element such as a Metal-Oxide-Semiconductor Field-Effect Transistor (MOSFET) or an Insulated-Gate Bipolar Transistor (IGBT) may be applied as the first switching element Q1. In particular, applying an N-channel depletion mode MOSFET is preferable.

The electric power storage unit 3 is an electric power storage device having a smaller capacity and a lower rated voltage than the DC power supply 2, and functions as a backup power supply when the DC power supply 2 is disconnected from the circuit. As a preferred example, a secondary battery such as a lithium-ion cell, a nickel-hydrogen cell or the like may be applied as the electric power storage unit 3. Alternatively, an electric double layer capacitor (EDLC) may be applied as the electric power storage unit 3. The electric power storage unit 3 supplies power to specific loads 21 such as an airbag activation circuit, a door-lock releasing device, and the like.

As an embodiment for being installed in a vehicle, a 12 V lead battery may be used as the DC power supply 2, and a lithium-ion cell may be used as the electric power storage unit 3.

The electric power storage unit 3 is connected to the DC power supply 2 and the load 21 with the DC-DC converter 4 interposed therebetween. The negative electrode side of the DC power supply 2 and the negative electrode side of the electric power storage unit 3 are connected by a wire 11. The wire 11 is grounded.

The DC-DC converter 4 is provided with a second switching element Q2, a third switching element Q3, a fourth switching element Q4, a fifth switching element Q5, and a coil 6. Preferably, a semiconductor switching element such as a MOSFET or an IGBT may be applied as the second switching element Q2 to the fifth switching element Q5, similarly to the first switching element Q1.

In the DC-DC converter 4, the second switching element Q2 and the third switching element Q3 are serially connected so as to constitute a first leg, and the fourth switching element Q4 and the fifth switching element Q5 are serially connected so as to constitute a second leg. In the first leg, the drain side of the second switching element Q2 is connected to the wire 12, and the source side of the third switching element Q3 is connected to the electric power storage unit 3. In the second leg, the drain side of the fourth switching element Q4 is connected to the wire 13, and the source side of the fifth switching element Q5 is connected to the wire 11.

The coil 6 of the DC-DC converter 4 has one end part connected between the second switching element Q2 and the third switching element Q3, and another end part connected between the fourth switching element Q4 and the fifth switching element Q5. The coil 6 stores and releases magnetic energy according to an on/off control of each of the second switching element Q2 to the fifth switching element Q5.

The first switching element Q1 and the DC-DC converter 4 receives an on/off control of the switches by a command from a control means that is not illustrated here.

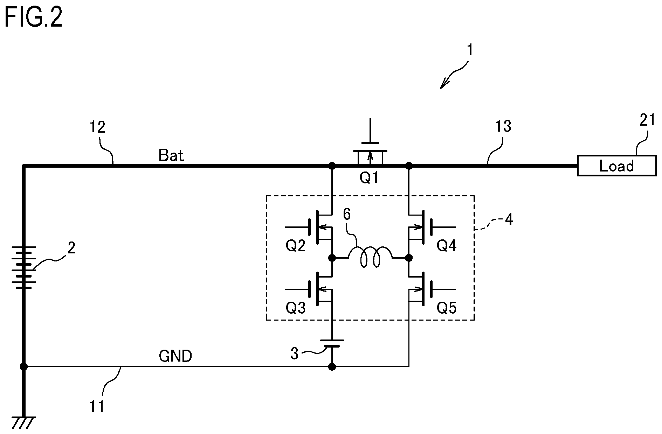

An operation of the power supply system 1 for a vehicle according to the present embodiment is described below with reference to Figs. 2 to 5.

### [Power supplying path during normal traveling]

In Fig. 2, the path through which the power supply system 1 for a vehicle supplies power to the load 21 during normal traveling is indicated by the thick line. During normal traveling, the first switching element Q1 is constantly switched on, and the second switching element Q2 is constantly switched off. Power is supplied from the DC power supply 2 to the load 21 via the wire 12, the first switching element Q1, and the wire 13.

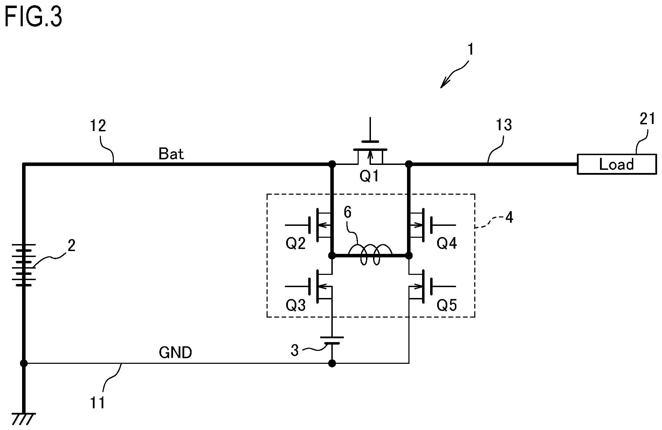

[Power supplying path when restarting the engine after a stopped state] In Fig. 3, the path through which power is supplied to the load 21 when the engine is restarted from a stopped state is indicated by the thick line. When the engine is restarted, the voltage supplied from the DC power supply 2 to the wire 12 temporarily decreases. At this time, the first switching element Q1 and the third switching element Q3 are controlled to be switched off, and the second switching element Q2 is switched on. The fourth switching element Q4 and the fifth switching element Q5 are controlled to be switched on and off in respective predetermined switching cycles. Power is supplied from the DC power supply 2 to the coil 6 via the wire 12 and the second switching element Q2, the voltage is boosted at the coil 6 according to the switching of the switching elements Q4, Q5, the power is supplied to the wire 13 and is then supplied to the load 21 after being smoothed by a smoothing circuit not illustrated here. In this way, when the engine is restarted from a stopped state, the coil 6, the fourth switching element Q4 and the fifth switching element Q5 function as a boost converter, allowing for supplying of power with a suitable voltage to the load 21.

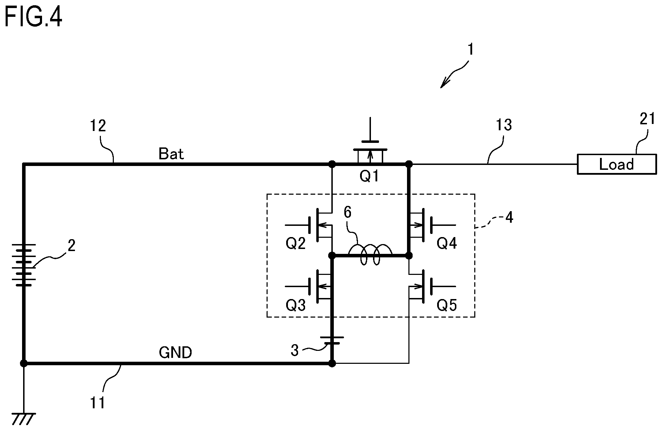

[Power supplying path from the DC power supply to the backup power supply] In Fig. 4, the path through which the DC power supply 2 charges the electric power storage unit 3 that is the backup power supply is indicated by the thick line. Supplying of power to the electric power storage unit 3 may be performed separately from the supplying of power to the load 21, or simultaneously with the supplying of power to the load 21. Charging of the electric power storage unit 3 by the DC power supply 2 is performed by switching the first switching element Q1 and the third switching element Q3 on, and switching the fourth switching element Q4 and the fifth switching element Q5 on and off in respective predetermined switching cycles. Power is supplied from the DC power supply 2 to the coil 6 via the wire 12, the first switching element Q1, and the fourth switching element Q4, the voltage is stepped down at the coil 6 by the switching of the switching elements Q4, Q5, and the power is supplied to the electric power storage unit 3 at a rated voltage. In this way, the coil 6, the fourth switching element Q4 and the fifth switching element Q5 function as a step-down converter, whereby charging of the electric power storage unit 3 is performed in a suitable manner.

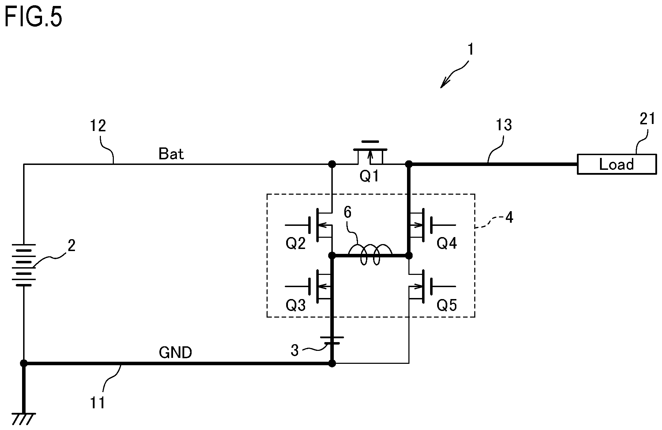

[Power supplying path from the backup power supply to the load] In Fig. 5, the path through which power is supplied from the electric power storage unit 3 of the backup power supply to the load 21 is indicated by the thick line. The electric power storage unit 3 is an electric power storage device having a small capacity and a low rated voltage, and therefore, there is a need to boost the power in order to supply power to the load 21. To that end, the first switching element Q1 and the second switching element Q2 are controlled to be switched off, and the third switching element Q3 is switched on. The fourth switching element Q4 and the fifth switching element Q5 are controlled to be switched on and off in respective predetermined switching cycles. Power is supplied from the electric power storage unit 3 to the coil 6 via the third switching element Q3, the voltage is boosted at the coil 6 according to the switching of the switching elements Q4, Q5, the power is supplied to the wire 13, and is then supplied to the load 21 after being smoothed by a smoothing circuit not illustrated here. In this way, when supplying of power from the DC power supply 2 has stopped, the coil 6, the fourth switching element Q4 and the fifth switching element Q5 function as a boost converter, allowing for suitable supplying of power from the electric power storage unit 3 to the load 21.

### [Power supplying path from the backup power supply to the load when the restarting the engine from a stopped state]

The path indicated by the thick line in Fig. 5 may also be used as the power supplying path for supplying power to the load 21 when the engine is restarted from a stopped state. That is to say, power from the electric power storage unit 3 of the backup power supply may be supplied to the coil 6 via the third switching element Q3, the voltage may be boosted at the coil 6 according to the switching of the switching elements Q4, Q5, and the power may be supplied to the wire 13 and then supplied to the load 21.

The configuration of the power supply system for a vehicle described in the present embodiment may be modified as appropriate. For example, when supplying power from the DC power supply to a plurality of loads, a plurality of wires may be provided according to the required voltage and electric current of the loads, and power may be supplied from the battery. Alternatively, when the power to be supplied to the load is small, a switching element such as a diode may be applied instead of a MOSFET. In addition, the type of the DC power supply and the electric power storage unit may be modified as appropriate.

### DESCRIPTION OF THE REFERENCE NUMERAL

1, 101 Power supply system
2 DC power supply
3 Electric power storage unit
4, 113, 114 DC-DC converter
6 Coil
11, 12, 13 Wire
21, 104, 105 Load
102 Power supply subsystem
103 Backup power supply subsystem
111, 112 Electric power storage device
Q1 First switching element
Q2 Second switching element
Q3 Third switching element
Q4 Fourth switching element
Q5 Fifth switching element

## Claims

1. A power supply system for a vehicle, the power supply system comprising:
a DC power supply mounted to a vehicle for supplying power to one or a plurality of loads; a first switching element that is serially connected between the DC power supply and the loads;
an electric power storage unit that is electrically connected to the DC power supply; and a DC-DC converter that is connected between the electric power storage unit and the first switching element,
wherein the DC-DC converter includes a second switching element, a third switching element, a fourth switching element, a fifth switching element, and a coil.

2. The power supply system for a vehicle according to claim 1, wherein the second switching element and the third switching element are serially connected so as to constitute a first leg,
the fourth switching element and the fifth switching element are serially connected so as to constitute a second leg,
an end part of the coil is connected between the second switching element and the third switching element, and
another end part of the coil is connected between the fourth switching element and the fifth switching element.

3. The power supply system for a vehicle according to claim 2, wherein the DC-DC converter is a boost/step-down converter, **characterized in that** the boost/step-down converter serves as a boost converter for boosting an electric current from the DC power supply when the first switching element is in an off state, by setting the second switching element to an on state, setting the third switching element to an off state, and switching the fourth switching element and the fifth switching element,
as a step-down converter for stepping down the electric current from the DC power supply when the first switching element is in an on state, by setting the second switching element to an off state, setting the third switching element to an on state, and switching the fourth switching element and the fifth switching element, and
as a boost converter for boosting an electric current from the electric power storage unit when the first switching element is in an off state, by setting the second switching element to an off state, setting the third switching element to an on state, and switching the fourth switching element and the fifth switching element.

4. The power supply system for a vehicle according to claim 1, wherein the electric power storage unit is a secondary battery or an electric double layer capacitor having a lower rated voltage than a supply voltage of the DC power supply.

5. The power supply system for a vehicle according to any of claims 1 to 4, wherein one or a plurality of switching elements selected from the group consisting of the first switching element, the second switching element, the third switching element, the fourth switching element, and the fifth switching element are MOSFETs.
